# EUROPEAN PATENT APPLICATION

(11) **EP 1 767 306 A1**
(43) Date of publication of application: **28.03.2007**
(21) Application number: 05758121.7
(22) Date of filing: 08.07.2005
(51) Int. Cl.: B23K 9/12, B25J 13/00

(54) **ARC WELDING ROBOT**

(30) Priority: 13.07.2004 JP 2004205667
(71) Applicant: MATSUSHITA ELECTRIC INDUSTRIAL CO., LTD., Osaka 571-8501 (JP)
(72) Inventor: IKEDA, Tatsuya c/o Matsushita Elec. Ind. Co.,Ltd., Chuo-ku Osaka-shi Osaka 540-6319 (JP); AIMI, Kei c/o Matsushita Elec. Ind. Co.,Ltd., Chuo-ku Osaka-shi Osaka 540-6319 (JP); MUKAI, Yasushi c/o Matsushita Elec. Ind. Co.,Ltd., Chuo-ku Osaka-shi Osaka 540-6319 (JP)
(74) Representative: Grünecker, Kinkeldey, Stockmair & Schwanhäusser Anwaltssozietät
(86) International application number: PCT/JP2005/012653
(87) International publication number: WO 2006/006518

(57) **Abstract**

In the visual inspection of welded members, there is a limit to welding quality control. Even in the welding quality control using general-purpose measuring instruments, sufficient data cannot be collected, and increased cost entails.

An arc welding robot of the invention is an arc welding robot which operates with a predetermined operation pattern by an operation program taught in advance, and welds a workpiece under predetermined welding conditions set in advance for each predetermined period in the operation pattern, includes: storage means for storing as history information at least one of a program name, a welding portion, and measurement data at the time of execution of the operation program. Therefore, it is possible to collect data necessary for welding quality control at low cost and with high accuracy without adding any special measuring instrument.

## Description

### TECHNICAL FIELD

The present invention relates to an arc welding robot having a data measurement function for controlling the welding quality in a welding process.

### BACKGROUND ART

Conventionally, quality control practiced in such as the automobile industry and the construction industry, in terms of its shade of meaning, largely meant quality control in the sense of "being not dissatisfied." However, the concept of quality control in recent years has shifted to quality control which is based on "attractive satisfaction," "quality which is selected by customers," and "quality for survival as a corporation." In conjunction with the thorough practice of this quality control, there has also been an increasing need for welding quality control in parts requiring welding. A conventional method of controlling the welding quality is carried out by performing visual inspection of welded members, current measurement, and voltage measurement, by connecting to a welding cable a general-purpose measurement logger having the function of logging their results, and by analyzing and controlling the results of the log.

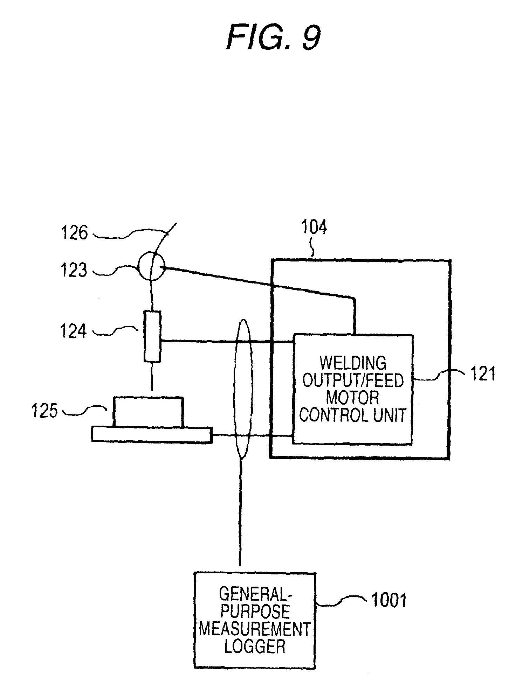

Here, a schematic diagram at a time when measurement is made by using a conventional general-purpose measurement logger is shown in Fig. 9. In Fig. 9, reference numeral 126 denotes a welding wire serving as a consumable electrode at the time of welding; 123, a feed motor for feeding a welding wire; 124, a welding torch for guiding the welding wire 126 and serving as an electrode for welding output; 125, a welding member which is welded; 121, a welding output/feed motor control unit for controlling the welding output and the feed motor 123; and 1001, a general-purpose measurement logger for detecting the current and the voltage of the welding output.

In the visual inspection, it is possible to find cracks and faulty shapes of welds which can possibly cause serious accidents of welding structures. However, the state of welding in the welding process can be recorded continuously by performing current measurement and voltage measurement by the general-purpose measurement logger, whereby it is possible to check whether or not the current value and the voltage value have reached abnormal levels, and detect an abnormality which cannot be found by the visual inspection.

In addition, as a conventional example of recording the welding process, a method has been proposed in which data measurement is made for shortening the cycle time without requiring an operator himself to effect measurement (refer to patent document 1).

As another conventional example, in order to analyze the welding phenomenon in a microscopic time region and to measure a change in the welding output in a macroscopic time region, a general-purpose measurement logger is conventionally connected to collect and display waveform data.
Patent document 1: JP-A-5-6216 (Fig. 1)

### DISCLOSURE OF THE INVENTION

### PROBLEMS TO BE SOLVED BY THE INVENTION

However, in the visual inspection of welded members, it is difficult to perform total inspection. Meanwhile, in a case where sampling inspection is performed, it is impossible to prevent incidental faults and melt-through.

In addition, in the case where the state of welding in the welding process is recorded continuously by performing current measurement and voltage measurement by the general-purpose measurement logger, there is no function of determining a difference between a command value and an actual output value. Hence, the recorded data needs to be checked by a human being to determine whether or not the welding is abnormal. In addition, the preparation of expensive general-purpose measurement loggers in all the welding process to be inspected incurs cost, and all the welding phenomena cannot be measured by the general-purpose measurement loggers.

In addition, a determination of good or bad welding members cannot be made with the method of measuring and displaying the required time and the cycle time for each operation in the welding process as in the patent document 1.

Further, the general-purpose measurement logger needs to be connected to analyze the welding phenomenon and measure a change in the welding output, and the connection of such general-purpose measurement loggers in all the welding process in a factory increases the cost, and the connection of the measuring instruments requires time and trouble. Furthermore, the short-circuiting frequency in the welding phenomenon cannot be measured by the general-purpose measurement logger.

In view of the above-described conventional problems, an object of the invention is to provide an arc welding robot having the function of collecting data necessary for welding quality control.

### MEANS FOR OVERCOMING THE INVENTION

An arc welding robot in accordance with the invention is an arc welding robot which operates with a predetermined operation pattern by an operation program taught in advance, and welds a workpiece under predetermined welding conditions set in advance for each predetermined period in the operation pattern, comprising: storage means for storing as history information at least one of a program name, a welding portion, and measurement data at the time of execution of the operation program.

An arc welding robot in accordance with the invention is an arc welding robot which operates with a predetermined operation pattern by an operation program taught in advance, and welds a workpiece under predetermined welding conditions set in advance for each predetermined period in the operation pattern, comprising: storage means for storing at least measurement data as history information, wherein the measurement data includes at least one of a welding current command value, an average value of a welding current output, a welding voltage command value, an average value of a welding voltage output, a wire feed rate, a short-circuiting frequency, a feed motor current, and a welding error, all during the predetermined period.

An arc welding robot in accordance with the invention is an arc welding robot which operates with a predetermined operation pattern by an operation program taught in advance, and welds a workpiece under predetermined welding conditions set in advance for each predetermined period in the operation pattern, comprising: storage means for storing at least measurement data as history information, wherein the measurement data includes a determination result in which a determination is made as to whether or not at least one of an average value of a welding current output, an average value of a welding voltage output, a short-circuiting frequency, and a feed motor current, all during a predetermined period, falls within a predetermined range set in advance.

An arc welding robot in accordance with the invention is an arc welding robot which operates with a predetermined operation pattern by an operation program taught in advance, and welds a workpiece under predetermined welding conditions set in advance for each predetermined period in the operation pattern, comprising: storage means for storing as history information at least one of a program name, a welding portion, and measurement data at the time of execution of the operation program, wherein a timing at which the storage means stores the history information can be selected from either the time of a change of all welding conditions or the time of occurrence of an abnormality.

An arc welding robot in accordance with the invention is an arc welding robot which operates with a predetermined operation pattern by an operation program taught in advance, and welds a workpiece under predetermined welding conditions set in advance for each predetermined period in the operation pattern, comprising: storage means for storing as history information at least one of a program name, a welding portion, and measurement data at the time of execution of the operation program, wherein the stored history information can be transferred to an external memory.

### ADVANTAGES OF THE INVENTION

In the invention, since the means for storing history information concerning welding is provided, it is possible to collect data necessary for welding quality control at low cost and with high accuracy without adding any special measuring instrument.

### BEST MODE FOR CARRYING OUT THE INVENTION

### (First Embodiment)

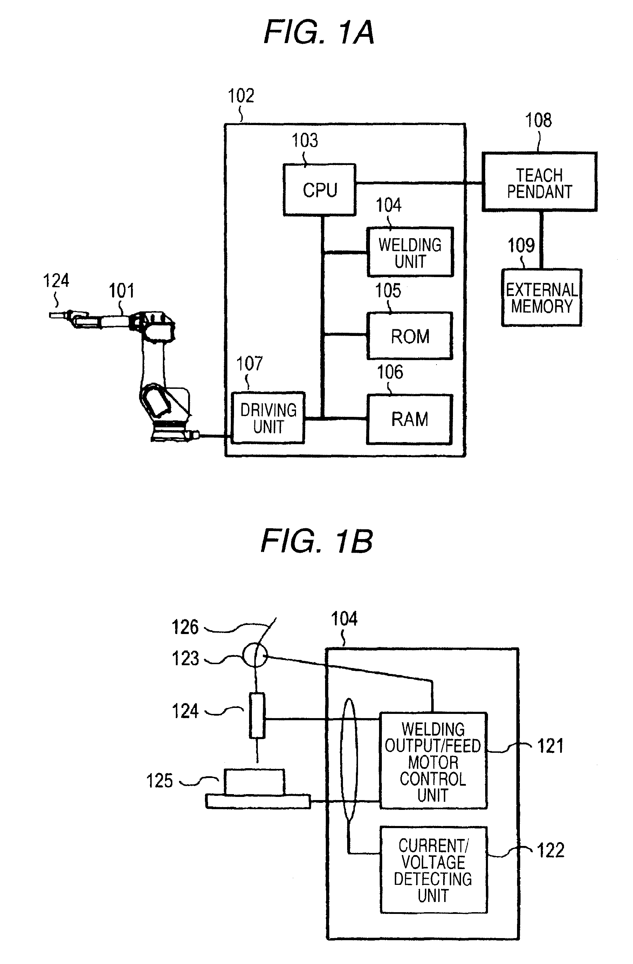

Referring now to Figs. 1 to 5, a description will be given of the best mode for carrying out the invention.

Fig. 1A shows the configuration of an industrial robot for realizing the invention. Reference numeral 101 denotes a manipulator; 125, a welding torch; 102, a controller for controlling the overall robot; 108, a teach pendant for operating the manipulator and the controller; 109, an external memory capable of storing set data and an operation program taught by an operator; 103, a CPU for controlling the controller itself; 104, a welding unit for effecting welding control; 105, a ROM which is a read-only memory for storing controller software for the CPU to interpret and operate; 106, a RAM which is a memory for storing the set data and an operation program taught by the operator and capable of being written and read at random; and 107, a driving unit for driving the manipulator.

Next, an internal configuration of the welding unit 104 is shown in Fig. 1B. Reference numeral 126 denotes a welding wire serving as a consumable electrode at the time of welding; 123, a feed motor for feeding a welding wire; 124, a welding torch for guiding the welding wire 126 and serving as an electrode for welding output; 125, a welding member which is welded; 121, a welding output/feed motor control unit for controlling the welding output and the feed motor 123; and 122, a current/voltage detecting unit for detecting the current and the voltage of the welding output.

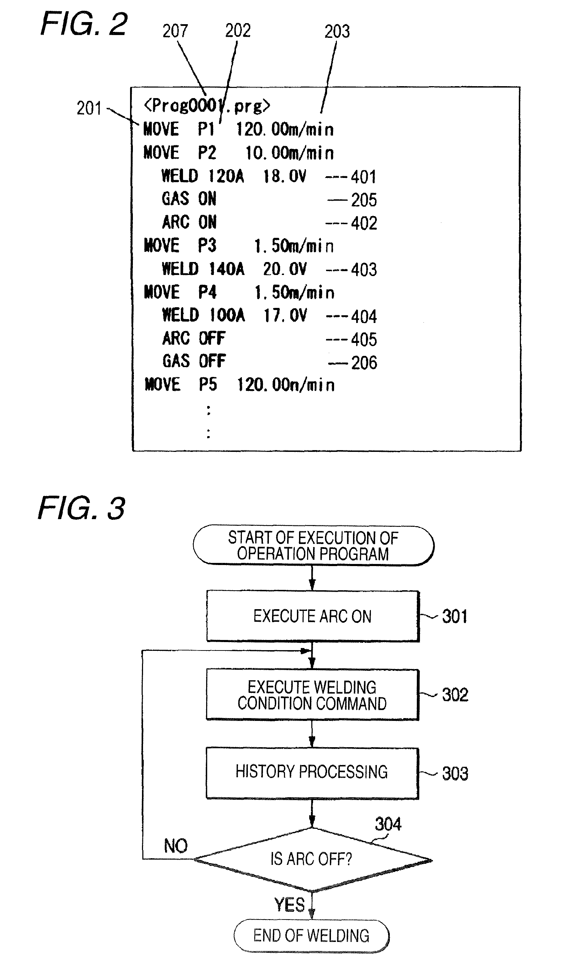

Next, a description will be given of an example of the operation program with reference to Fig. 2. Fig. 2 is a diagram illustrating the example of the operation program, in which reference numeral 207 denotes a program name of this operation program. In addition, numeral 201 denotes an operation command for the robot. "MOVE" is a command for moving the manipulator, and it is possible to designate a linear motion, an arcuate motion, and the like. It should be noted that their distinction is not particularly made herein. In addition, reference numeral 202 denotes a teaching point name, and corresponds to a welding portion in a portion where welding is performed. It should be noted that although the nomenclature of the teaching point name can be set freely, the teaching point names are expressed herein as P1 and P2 by way of example. In addition, reference numeral 203 denotes the moving velocity when the manipulator is moved, and a velocity of 0.30 m/min to 3.0 m/min or thereabouts is designated for a welding section, while a velocity close to a maximum velocity is often designated for an idle running section where welding is not performed. Furthermore, reference numerals 401, 403, and 404 denote welding condition commands, which are designated as welding conditions before a welding start, during welding, and on completion of the welding. It should be noted that in the example of 401 a current command value indicates 120 A (amperes), and a voltage command value indicates 18.0 V (volts).

Further, reference numerals 205 and 206 denote commands for turning a welding gas on and off. If the gas is turned on, a gas valve (not shown) is set in an open state to supply the welding gas. If the gas is turned off, the gas valve is set in a closed state to stop the supply of the welding gas. In addition, reference numerals 402 and 405 denote commands for turning the arc on and off. If the arc is turned on, a welding output is outputted from the welding output/feed motor controller 121 to supply a voltage between he welding wire 126 and the welding member 125, and at the same time the feed motor 123 is driven by the welding output/feed motor controller 121 to feed the welding wire 126 toward the welding member 125. Then, when the welding wire 126 comes into contact with the welding member 125, a short-circuiting current flows, and at the same time the short-circuiting is canceled by the fuse effect to generate an arc of high heat. Subsequently, as the short-circuiting and the arc are repeated, the welding portion is set in a highly heated state, and is joined by the fusion of the metal. In addition, the short-circuiting frequency at the time of the repetition of the short-circuiting and the arc constitutes one factor in carrying out the welding quality control.

Next, referring to Figs. 2 to 4, a description will be given of a means for storing at least one of the program name, the welding portion, and the measurement data at the time of execution of the operation program as history information.

In the example of the operation program in Fig. 2, when the command for turning the arc on is executed, processing 301 for execution of the arc on is executed in the processing flow in Fig. 3.

Next, when the welding condition command 2 at 403 in Fig. 2 is executed, processing 302 is executed in the flow in Fig. 3, and history processing of processing 303 is then executed. Then, in the history processing of processing 303, the following are recorded in the RAM in Fig. 1: the operation program name 207, the teaching point name 202, a welding current command value, an average value of a welding current output, a welding voltage command value, an average value of a welding voltage output, a wire feed rate, a short-circuiting frequency, a feed motor current, and a welding error until the welding condition command at 403 in Fig. 2 is executed. This recording processing is effected by the CPU 103 in Fig. 1.

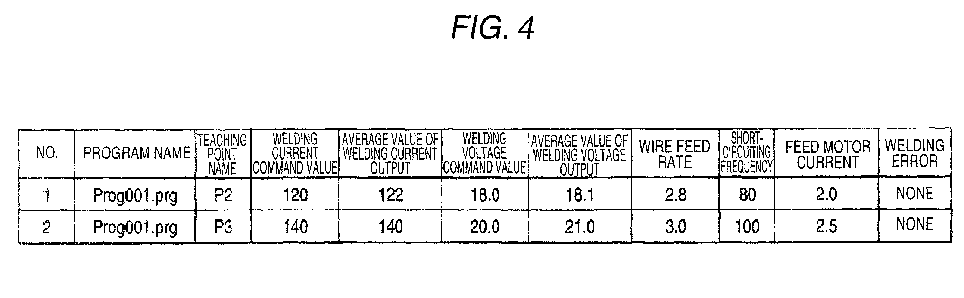

An example of a format which is recorded at this time is shown in Fig. 4. Here, the portion of No. 1 in Fig. 4 shows the history information when the welding condition command at 401 in Fig. 2 has been executed, and Prog0001.prg is recorded as the program name, and P2 is recorded as the teaching point name. Further, welding conditions at the time of the teaching point name P2 are successively recorded. Namely, a current command value of 120 A (amperes) instructed in the welding condition command at 401 in Fig. 2 is recorded as the welding current command value, and a voltage command value of 18.0 V (volts) instructed in the welding condition command at 401 in Fig. 2 is recorded as the welding voltage command value.

Further, an actual welding current value of 122A (amperes) detected by the current/voltage detecting unit 122 in Fig. 1 is recorded as the average value of the welding current output, and an actual welding voltage value of 18.1 V (volts) detected by the current/voltage detecting unit 122 in Fig. 1 is recorded as the average value of the welding voltage output. In addition, a wire feed rate value of 2.8 m/min at the welding output/feed motor control unit 121 in Fig. 1 is recorded as the wire feed rate. An actual short-circuiting frequency value of 80 detected by the current/voltage detecting unit 122 in Fig. 1 is recorded as the short-circuiting frequency. A feed motor current value of 2.0 A (amperes) at the welding output/feed motor control unit 121 in Fig. 1 is recorded as the feed motor current. Then, since no welding error has occurred, "none" is recorded.

Next, the history information when the welding condition command at 404 in Fig. 2 is executed for the portion of number 2 in Fig. 4 is shown. In this history information as well, in the same way as at the time of number 1 in Fig. 4, Prog0001.prg is recorded as the program name, and P3 is recorded as the welding portion (teaching point name). In a similar manner thereafter, 140 A (amperes) is recorded as the welding current command value instructed in the welding condition command at 403 in Fig. 2, and a voltage command value of 20.0 V (volts) instructed in the same command is recorded as the welding voltage command value. In the same way as at the time of the welding portion (teaching point name) P2, respective values are detected by the current/voltage detecting unit 122 and the welding output/feed motor control unit 121. An actual welding current value of 140A (amperes) is recorded as the average value of the welding current output, and an actual welding voltage value of 21.0 V (volts) is recorded as the average value of the welding voltage output. In addition, a wire feed rate value of 3.0 m/min is recorded as the wire feed rate. An actual short-circuiting frequency value of 100 is recorded as the short-circuiting frequency. A feed motor current value of 2.5 A (amperes) is recorded as the feed motor current. Then, since no welding error has occurred, "none" is recorded.

Next, when the command for turning the arc on and off at 405 in Fig. 2 is executed, a determination is made in processing 304 of the processing flow in Fig. 3 that the arc has been turned off, and the welding ends. It should be noted that the respective processing in the processing flow in Fig. 3 is carried out by the CPU 103 in Fig. 1.

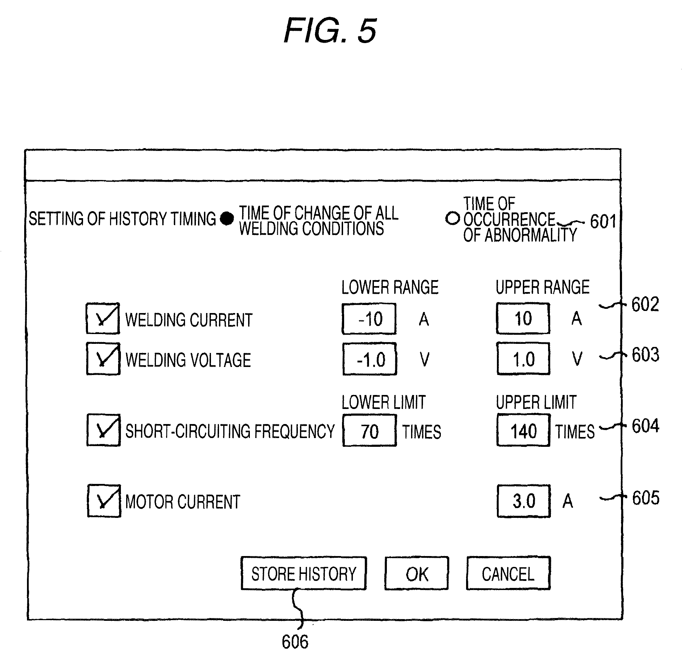

Thus, each time the welding condition command is executed, i.e., a change is made in the welding condition, the operation program name, the teaching point name, the welding current command value, the average value of the welding current output, the welding voltage command value, the average value of the welding voltage output, the wire feed rate, the short-circuiting frequency, the feed motor current, and the welding error are recoded in the RAM 106 in Fig. 1. Namely, it is possible to realize an arc welding robot which has a storage means for storing as the history information at least one of the program name, the welding portion, and the measurement data at the time of execution of the operation program.
Next, Fig. 5 shows an example of a setting screen for effecting a setting for determining whether or not at least one of the average value of the welding current output, the average value of the welding voltage output, the short-circuiting frequency, and the feed motor current is in a predetermined range set in advance.

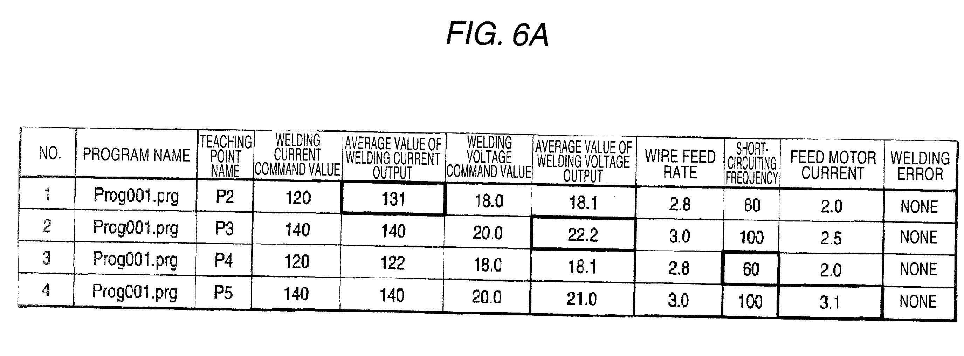

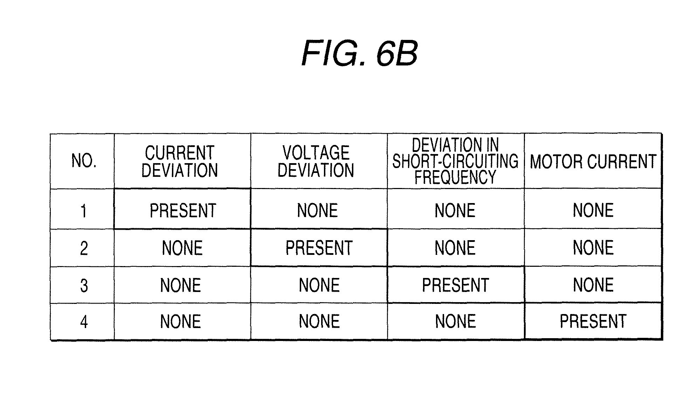

In the setting screen shown in Fig. 5, in the setting of a predetermined range of the welding current at 602, for example, a determination is made that the welding current has deviated from a predetermined range when the average value of the welding current output has exceeded a range of ±10 A (amperes) with respect to the welding current command value. An example of the determination is shown in Figs. 6A and 6B.
In the history of number 1 in Fig. 6A, the welding current command value is 120 A (amperes), and upper and lower limit values of the output current value allowed are ±10 A (amperes), as set at 602 in Fig. 5. In contrast, since the detected average value of the welding current output is 131 A (amperes), a determination is made that the welding current has deviated from an allowable predetermined range, so that a history is shown as "present" in the column of the current deviation, as shown in Fig. 6B.
It should be noted that the common numbers in Figs. 6A and 6B indicate identical histories. The same also applies to the drawings that follow.

Further, the detection of the welding current output is effected by the current/voltage detecting unit 122 shown in Fig. 1, and the determination as to whether or not the welding current has deviated from a predetermined range is carried out by the CPU 103.

Similarly, in the setting of a predetermined range of the welding voltage at 603 in the setting screen shown in Fig. 5, a determination is made that the welding voltage has deviated from an allowable predetermined range when the average value of the welding voltage output has exceeded a range of ±1.0 V (volts) with respect to the welding voltage command value. An example of the determination is shown in Figs. 6A and 6B. In the history of number 2 in Fig. 6A, the welding voltage command value is 20.0 V (volts), and since the average value of the welding voltage output is 22.2 V (volts), a determination is made that the welding voltage has deviated from the predetermined range, so that a history of the voltage deviation being "present" is left for number 2 in Fig. 6B. It should be noted that the detection of the welding voltage output is effected by the current/voltage detecting unit 122 shown in Fig. 1, and the determination as to whether or not the welding current has deviated from a predetermined range is carried out by the CPU 103.

Similarly, in the setting of a predetermined range of the short-circuiting frequency at 604 in the setting screen shown in Fig. 5, a determination is made that the short-circuiting frequency has deviated from a predetermined range when the short-circuiting frequency has exceeded a range of 70 to 140. An example of the determination is shown in Figs. 6A and 6B. In the history of number 3 in Fig. 6A, since the short-circuiting frequency is 60, a determination is made that the short-circuiting frequency has deviated from the allowable predetermined range, so that a history of the short-circuiting frequency deviation being "present" is left in Fig. 6B. It should be noted that the detection of the short-circuiting frequency is effected by the current/voltage detecting unit 122 shown in Fig. 1, and the determination as to whether or not the short-circuiting frequency has deviated from a predetermined range is carried out by the CPU 103.

In addition, in the setting of a predetermined range of the motor current at 604 in the setting screen shown in Fig. 5, a determination is made that the motor current has deviated from a predetermined range when the motor current has reached 3.0 A (amperes) or higher. An example of the determination is shown in Figs. 6A and 6B. In the history of number 4 in Fig. 6A, since the motor current is 3.1 A (amperes), a determination is made that the motor current has deviated from the predetermined range, so that a history of the motor current deviation being "present" is left in Fig. 6B. It should be noted that the detection of the motor current is effected by the welding output/feed motor control unit 121 shown in Fig. 1, and the determination as to whether or not the motor current has deviated from a predetermined range is carried out by the CPU 103.

The above-described function of determining whether or not a relevant parameter falls within a predetermined range set in advance cannot be realized by a general-purpose measuring instrument. In this embodiment, however, only a portion which showed an abnormal result can be extracted by realizing an arc welding robot which has the storage means for storing as the history information at least one of the program name, the welding portion, and the measurement data at the time of execution of the operation program, and in which the measurement data includes a determination result in which a determination is made as to whether or not at least one of the average value of the welding current output, the average value of the welding voltage output, the short-circuiting frequency, and the feed motor current, all during a predetermined period, falls within a predetermined range set in advance.

In addition, in the setting screen shown in Fig. 5, reference numeral 601 denotes a history timing setting display portion. In this embodiment, the arrangement provided is such that the timing for storing the history information can be selected from either the time of a change of all the welding conditions or the time of occurrence of an abnormality, and the state of the selection is displayed in the history timing setting display portion 601.

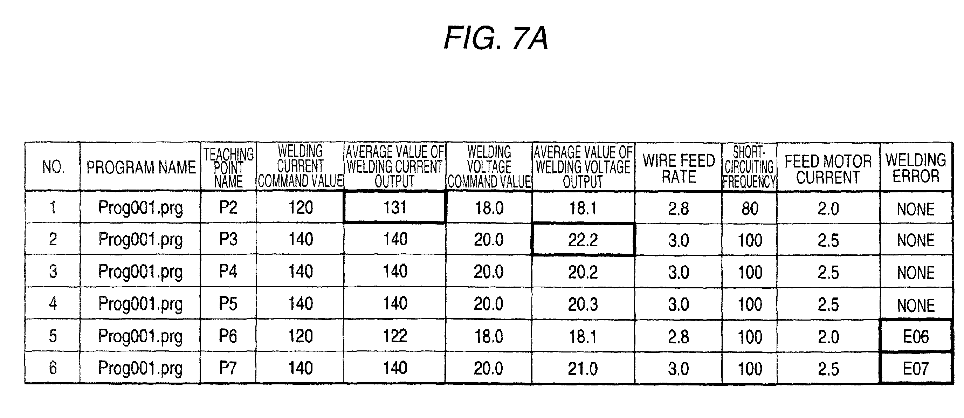

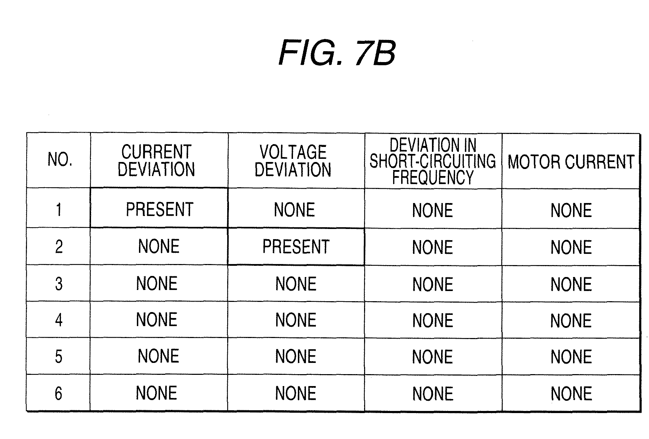

Here, an example in which the time of a change of all the welding conditions has been selected as the history timing setting is shown in Figs. 7A and 7B. In the history of number 1 in Fig. 7A, a determination is made as the history at the teaching point P2 that the average value of the welding current output has deviated from a predetermined range, and a history of the current deviation being "present" is left in Fig. 7B. In addition, in the history of number 2, a determination is made as the history at the teaching point P3 that the average value of the welding voltage output has deviated from a predetermined range, and a history of the voltage deviation being "present" is left in Fig. 7B. Next, in the histories of numbers 3 and 4 in Fig. 7A, as the history of the teaching point P4, neither the deviation from the predetermined range nor the welding error has occurred; however, histories are left since the time of a change of all the welding conditions has been selected as the history timing setting. Next, as for the histories of numbers 5 and 6, as the histories of the teaching points P6 and P7, no deviation from the predetermined range has occurred; however, histories are left since welding errors have occurred.

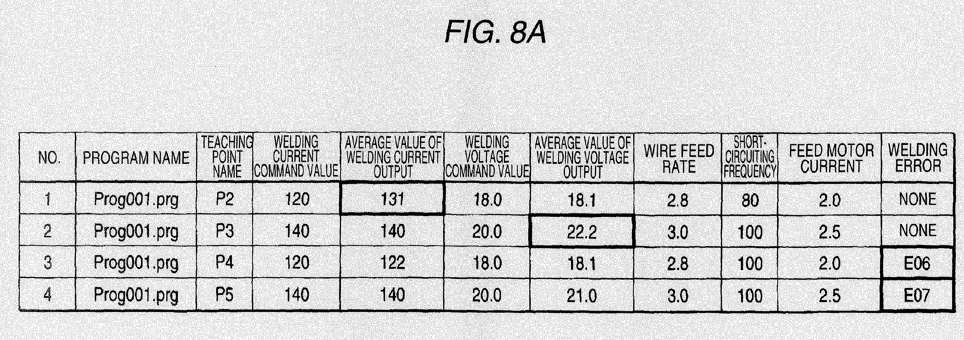

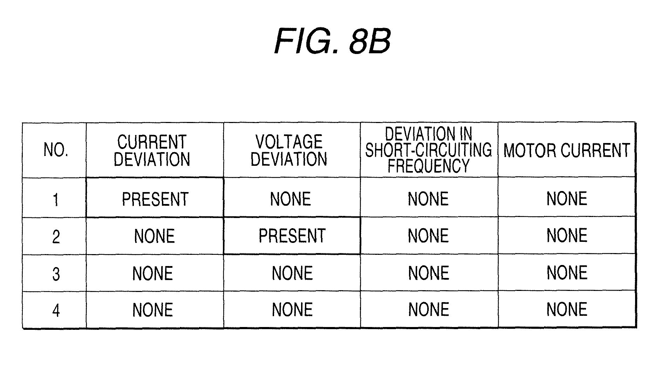

Next, an example in which the time of occurrence of an abnormality has been selected as the history timing setting is shown in Figs. 8A and 7B. In the history of number 1 in Fig. 8A, a determination is made as the history at the teaching point P2 that the average value of the welding current output has deviated from a predetermined range, and a history of the current deviation being "present" is left for number 1 in Fig. 8B.

In addition, in the history of number 2, a determination is made as the history at the teaching point P3 that the average value of the welding voltage output has deviated from a predetermined range, and a history of the voltage deviation being "present" is left. Next, as the histories of the teaching points P4 and P5, neither the deviation from the predetermined range nor the welding error has occurred, and the time of occurrence of an abnormality has been selected as the history timing setting, so that histories are not left in Figs. 8A and 8B.

Next, in the histories of numbers 3 and 4, as the histories of the teaching points P4 and P5, no deviation from the predetermined range has occurred, but the welding errors have occurred, so that histories are left. In addition, as for the history of number 4, as the history of the teaching point P7, no deviation from the predetermined range has occurred, but the welding error has occurred, so that a history is left.

As described above, the timing at which the history information is stored by the storage means is made selectable from either the time of a change of all the welding conditions or the time of occurrence of an abnormality. Therefore, when the time of a change of all the welding conditions has been selected, it is possible to calculate the rate of occurrence of abnormalities with respect to the total number of weldings. Meanwhile, when the time of occurrence of an abnormality has been selected, it is possible to count only the number of occurrences of abnormalities, and the number of data to be recorded becomes smaller than when "all weldings" has been selected, so that the storage, processing, and the like of the data are facilitated.

In addition, in the setting screen shown in Fig. 5, reference numeral 606 denotes a history storage button, and by selecting this button, the stored history information is transferred to an external memory. Namely, by selecting history storage button 606, the history information recorded in the RAM 106 in Fig. 1 is transmitted to the external memory 109 via the CPU 103 and the teach pendant 108, and is recorded in the external memory 109. This external memory 109 is a commercially available memory card, flexible disk, or the like, and any medium may be used.

By so doing, an operator who uses the robot, a manager who manages the entire production line, or the like is able to fetch the history information recorded in the external memory by using a personal computer, and effect such as statistical processing and graphic display by using commercially available spread sheet software and the like.

### INDUSTRIAL APPLICABILITY

In the invention, an arc welding robot is realized which operates with a predetermined operation pattern by an operation program taught in advance, and welds a workpiece under predetermined welding conditions in accordance with the operation pattern, comprising: storage means for storing as history information at least one of a program name, a welding portion, and measurement data at the time of execution of the operation program. Accordingly, it is possible to collect data necessary for welding quality control, and the invention is useful for welding quality control and the like in such as the automobile industry and the construction industry.

### BRIEF DESCRIPTION OF THE DRAWINGS

Fig. 1A is a schematic diagram of an arc welding robot in accordance with a first embodiment of the invention;
Fig. 1B is a diagram illustrating an internal configuration of a welding section;
Fig. 2 is a diagram illustrating an example of an operation program;
Fig. 3 is a diagram illustrating the processing flow of the arc welding robot in accordance with the first embodiment of the invention;
Fig. 4 is a diagram illustrating a first example of history information;
Fig. 5 is a diagram illustrating an example of a setting screen;
Fig. 6A is a first diagram in a second example of the history information;
Fig. 6B is a second diagram in the second example of the history information;
Fig. 7A is a first diagram in the example of the history information when the history timing setting is the time of a change of all the welding conditions;
Fig. 7B is a second diagram in the same example of the history information;
Fig. 8A is a first diagram in the example of the history information when the history timing setting is the time of occurrence of an abnormality;
Fig. 8B is a second diagram in the same example of the history information; and
Fig. 9 is a schematic diagram at a time when measurement is made by using a conventional general-purpose logger.

### DESCRIPTION OF REFERENCE NUMERALS AND SIGNS

106: external memory (RAM)
109: external memory
202: welding portion (teaching point name)
207: operation program name
606: history storage button

## Claims

1. An arc welding robot which operates with a predetermined operation pattern by an operation program taught in advance, and welds a workpiece under predetermined welding conditions set in advance for each predetermined period in the operation pattern, comprising: storage means for storing as history information at least one of a program name, a welding portion, and measurement data at the time of execution of the operation program.

2. An arc welding robot which operates with a predetermined operation pattern by an operation program taught in advance, and welds a workpiece under predetermined welding conditions set in advance for each predetermined period in the operation pattern, comprising: storage means for storing at least measurement data as history information, wherein the measurement data includes at least one of a welding current command value, an average value of a welding current output, a welding voltage command value, an average value of a welding voltage output, a wire feed rate, a short-circuiting frequency, a feed motor current, and a welding error, all during the predetermined period.

3. An arc welding robot which operates with a predetermined operation pattern by an operation program taught in advance, and welds a workpiece under predetermined welding conditions set in advance for each predetermined period in the operation pattern, comprising: storage means for storing at least measurement data as history information, wherein the measurement data includes a determination result in which a determination is made as to whether or not at least one of an average value of a welding current output, an average value of a welding voltage output, a short-circuiting frequency, and a feed motor current, all during a predetermined period, falls within a predetermined range set in advance.

4. An arc welding robot which operates with a predetermined operation pattern by an operation program taught in advance, and welds a workpiece under predetermined welding conditions set in advance for each predetermined period in the operation pattern, comprising: storage means for storing as history information at least one of a program name, a welding portion, and measurement data at the time of execution of the operation program, wherein a timing at which the storage means stores the history information can be selected from either the time of a change of all welding conditions or the time of occurrence of an abnormality.

5. An arc welding robot which operates with a predetermined operation pattern by an operation program taught in advance, and welds a workpiece under predetermined welding conditions set in advance for each predetermined period in the operation pattern, comprising: storage means for storing as history information at least one of a program name, a welding portion, and measurement data at the time of execution of the operation program, wherein the stored history information can be transferred to an external memory.

## Amended claims

### Amended claims under Art. 19.1 PCT

**1.** Amended) An arc welding robot which operates with a predetermined operation pattern by an operation program taught in advance, and welds a workpiece under predetermined welding conditions set in advance for each predetermined period in the operation pattern, comprising:
storage means for storing as history information at least one of a program name, a welding portion, and measurement data at the time of execution of the operation program
wherein a timing at which the storage means stores the history information can be selected from either the time of a change of all welding conditions or the time of occurrence of an abnormality.

**2.** Amended) The arc welding robot according to claim 1, wherein the storage means stores at least measurement data as history information, and the measurement data includes at least one of a welding current command value, an average value of a welding current output, a welding voltage command value, an average value of a welding voltage output, a wire feed rate, a short-circuiting frequency, a feed motor current, and a welding error, all during the predetermined period.

**3.** Amended) The arc welding robot according to claim 1, wherein the storage means stores at least measurement data as history information, and the measurement data includes a determination result in which a determination is made as to whether or not at least one of an average value of a welding current output, an average value of a welding voltage output, a short-circuiting frequency, and a feed motor current, all during a predetermined period, falls within a predetermined range set in advance.

**4.** Amended) The arc welding robot according to claim 1, wherein the stored history information can be transferred to an external memory.

**5.** Deleted)
